# EUROPÄISCHE PATENTSCHRIFT

(11) **EP 4 197 740 B1**
(45) Veröffentlichungstag und Bekanntmachung des Hinweises auf die Patenterteilung: **18.12.2024**
(21) Anmeldenummer: 22212218.6
(22) Anmeldetag: 08.12.2022
(51) Int. Cl.: B29C 49/64, B29C 49/68, B29C 49/78, B29K 67/00, B29L 31/00

(54) **VORRICHTUNG UND VERFAHREN ZUM ERWÄRMEN VON KUNSTSTOFFVORFORMLINGEN MIT ANPASSUNG DER HEIZLEISTUNG**
DEVICE AND METHOD FOR HEATING PLASTIC PRE-FORMS WITH ADJUSTMENT OF THE HEATING POWER
DISPOSITIF ET PROCÉDÉ DE CHAUFFAGE D'ÉBAUCHES EN PLASTIQUE AVEC RÉGLAGE DE LA PUISSANCE DE CHAUFFAGE

(30) Priorität: 14.12.2021 DE 102021132983
(43) Veröffentlichungstag der Anmeldung: 21.06.2023
(73) Patentinhaber: Krones AG, 93073 Neutraubling (DE)
(72) Erfinder: Tauber, Jan, 93073 Neutraubling (DE); Senn, Konrad, 93073 Neutraubling (DE)
(74) Vertreter: Hannke Bittner & Partner mbB Regensburg

(56) Entgegenhaltungen:
- EP-A1- 3 446 852
- EP-A2- 2 436 507
- US-A1- 2014 145 375
- US-A1- 2020 307 064

## Beschreibung

Die vorliegende Erfindung bezieht sich auf eine Vorrichtung und ein Verfahren zum Erwärmen von Kunststoffvorformlingen. Derartige Vorrichtungen und Verfahren sind aus dem Stand der Technik seit langem bekannt, und z.B. in den Patentschriften EP3446852A1, US2014/145375A1, EP2436507A2 und US2020/307064A1 beschrieben.

Die Kunststoffvorformlinge werden dabei innerhalb einer Erwärmungseinrichtung wie beispielsweise einem Ofen, mit einer Vielzahl von Heizeinrichtungen auf eine vorgegebene Temperatur erwärmt. Üblicherweise handelt es sich dabei um eine für die Blasformung bzw. Umformung der Kunststoffvorformlinge zu Kunststoffbehältnissen notwendige Temperatur. Bekannte Blasformmaschinen weisen dabei eine elektrische Reckeinheit auf welche, wie aus dem internen Stand der Technik der Anmelderin bekannt ist, unterschiedliche Blasradgeschwindigkeiten bei gleichen Behälterqualitäten ermöglichen und somit variable Produktionszahlen. Eine geschwindigkeitsregelbare Blasmaschine ist dabei beispielsweise auch aus der DE 10 2017 126 240 A1 bekannt. Auch bekannte Füllmaschinen und Etikettiermaschinen können die Geschwindigkeit variieren.

Bisher ist es allerdings nicht möglich auch die Geschwindigkeit im Ofen bei gleichbleibender Erwärmung der Kunststoffvorformlinge zu variieren, da sich beispielsweise bei langsamerer Transportgeschwindigkeit durch den Ofen die Verweildauer der Kunststoffvorformlinge im Ofen erhöhen würde und somit auch die Verweildauer der Kunststoffvorformlinge vor den einzelnen Lampen bzw. Heizeinrichtungen.

Der vorliegenden Erfindung liegt daher die Aufgabe zugrunde eine Vorrichtung und ein Verfahren bereitzustellen, welche/welches eine Regelung der Transportgeschwindigkeit des Ofens bei gleichbleibenden Vorformlingstemperaturen am Ausgang des Ofens ermöglicht. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf ein Verfahren zum Erwärmen von Kunststoffvorformlingen gerichtet, wobei die Kunststoffvorformlinge innerhalb einer Erwärmungseinrichtung entlang eines vorgegebenen Transportpfads transportiert werden und während dieses Transports mittels einer Vielzahl von entlang des Transportpfads angeordneten Heizeinrichtungen auf eine vorgegebene Temperatur erwärmt werden, und wobei eine auf die Kunststoffvorformlinge auftreffende Heizleistung der Heizeinrichtungen veränderbar ist.

Erfindungsgemäß wird die auf die Kunststoffvorformlinge auftreffende Heizleistung der Heizeinrichtungen in Abhängigkeit einer Transportgeschwindigkeit der Kunststoffvorformlinge geregelt.

Es wird demnach erfindungsgemäß vorgeschlagen die Heizleistung jeder Heizeinrichtung bevorzugt individuell auf die Transportgeschwindigkeit der Kunststoffvorformlinge anzupassen. Insbesondere wird demnach bei langsamerer Transportgeschwindigkeit die Heizleistung der Heizeinrichtungen verringert, da die Kunststoffvorformlinge längere Zeit in der Erwärmungseinrichtung verbleiben und damit auch längere Zeit vor den einzelnen Heizeinrichtungen. Entsprechend wird bei einer höheren Transportgeschwindigkeit die Heizleistung der Heizeinrichtung erhöht, da die Zeitspanne, in welcher die Kunststoffvorformlinge in der Erwärmungseinrichtung verbleiben, kürzer ist.

Diese Regelung der Heizleistung ist dabei insbesondere im Hinblick auf eine variable Blasmaschine, welche in Transportrichtung der Kunststoffvorformlinge gesehen, nach der Erwärmungseinrichtung angeordnet ist, vorteilhaft. Das vorgeschlagene Verfahren stellt zudem eine Regelung der Heizeinrichtungen ohne viel Regelaufwand bereit. Insbesondere kann somit auch bei einer geblockten Gesamtanlage, mit mehreren geblockten Maschinen, wie beispielsweise Erwärmungseinrichtung, Blasformmaschine, Fülleinrichtung, Verschließer, Sterilisationseinrichtung, oder dergleichen, in einfacher Weise eine variable Ausbringleistung ermöglicht werden.

Bei dieser Vorgehensweise wird davon ausgegangen, dass die Vorformlinge bevorzugt zu einem bestimmten Zeitpunkt (t=0) in der Blasformmaschine sind bzw. in diese einlaufen und der Blasvorgang beginnt. Vorher wurden die Vorformlinge durch die Erwärmungseinrichtung transportiert und mit bestimmten Heizleistungen beaufschlagt. Dies führt, wie in den Figuren näher dargestellt ist, zu einer Heizhistorie die mit dem Start in der ersten Heizzone bzw. Heizungseinrichtung (t=SH1) beginnt und bei dem oben erwähnten bestimmten Zeitpunkt (t=0) endet, zu dem die Vorformlinge die Blasformmaschine erreichen.

Es wird dabei vereinfacht angenommen, dass während einer Heizzone die abgestrahlte Leistung konstant ist (was eine grobe Vereinfachung ist, die aber beim Endergebnis nicht weiter ins Gewicht fällt) und somit die aufgenommen Energie der Vorformlinge vor jeder angeschalteten Heizeinrichtung linear zunimmt und vor einer ausgeschalteten Heizeinrichtungen konstant bleibt.

Bei der Transporteinrichtung handelt es sich bevorzugt um eine umlaufende Transporteinrichtung mit geradlinigen und gekrümmten Transportabschnitten. Bevorzugt weist die Transporteinrichtung dabei einen linearen Abschnitt auf, entlang dem die Kunststoffvorformlinge einen linearen Transportpfad entlang bewegt werden. Vorteilhaft weist die Transporteinrichtung auch wenigstens einen, bevorzugt zwei, gekrümmte Abschnitte auf, wobei sich die linearen Abschnitte und die gekrümmten Abschnitte bevorzugt abwechseln.

Bevorzugt handelt es bei wenigstens einem gekrümmten Abschnitt um eine Ausgleichszone, in welcher keine Heizeinrichtungen angeordnet sind Die Temperatur des Kunststoffvorformlings bleibt demnach in der Ausgleichszone konstant bzw. ändert sich nicht wesentlich. Bevorzugt kann es sich auch bei einem Transportrad zur Übergabe der erwärmten Kunststoffvorformlinge an die nachfolgende Blasformmaschine um eine derartige Ausgleichszone handeln, so dass die Temperatur des Kunststoffvorformlings von der letzten Heizeinrichtung bis zur Zufuhr in die Blasformmaschine (nach vereinfachter Annahme) konstant bzw. zumindest nahezu konstant bleibt.

Wird nun die Transportgeschwindigkeit geändert, bleibt die Steigung der Energiezunahme bei einer eingeschalteten Heizeinrichtung konstant, jedoch ändert sich die Zeit, welche der Vorformling vor der Heizeinrichtung verbleibt und von dieser erwärmt wird. Um somit dieselbe Energiemenge einer Heizeinrichtung zu erreichen, muss, wie oben bereits erwähnt, bei langsamerer Geschwindigkeit die Heizleistung verringert werden und bei schnellerer Geschwindigkeit die Heizleistung entsprechend erhöht werden, um den gleichen Energieeintrag zu gewährleisten. Bevorzugt wird dabei eine Stellgröße der einzelnen Heizeinrichtungen verändert und insbesondere verringert und/oder erhöht.

Es wird demnach vorgeschlagen die Heizeinrichtungen bzw. deren Heizleistung so zu verändern oder ein- und auszuschalten, dass bei einer Abb- bzw. Nachbildung der Heizhistorie je horizontaler Heizeinrichtung in einem Diagramm sich ein möglichst ähnlicher Energie-Zeitverlauf je Heizeinrichtung ergibt, wie bei der ursprünglichen bzw. vorherigen Einstellung der Heizleistung.

Da typischerweise alle Lampen einer Heizeinrichtung bzw. Heizzone die gleiche Stellgröße haben, gibt es bevorzugt die Möglichkeit dies so bei zu behalten und zu versuchen mit einer gesamtheitlichen Stellgröße den Energie-Zeitverlauf nachzustellen. Vor allem die Ausgleichszonen an der Umlenkung und am Transportstern können nicht uneingeschränkt kompensiert werden. Daher ergeben sich hier häufig etwas andere Verläufe. Um dennoch einen möglichst ähnlichen Energie-Zeitverlauf zu erzeugen, kann vor diesen Zonen die Energie etwas überhöht sein und bevorzugt die Heizleistung der vor diesen Ausgleichszonen angeordneten Heizeinrichtungen höher sein. Die ähnlichen Verläufe der Heizhistorien können nach verschiedenen mathematischen Mustern stattfinden und beispielsweise die Summe kleinster Fehlerquadrate sein, oder auch der Versuch, dass die Flächen zwischen den beiden unterschiedlichen Verläufen minimal sind oder, dass am Ende jeder Heizzone der Energieverlauf identisch ist.

Diese Anpassung kann bevorzugt in der Hauptsteuerung, in einem weiteren Edgedevice oder auch in einem cloudbasierten Optimierer vorgenommen werden. Um dem möglichen Optimum nahezukommen ist es ratsam, die Zonenleistung in einer Heizeinrichtung bzw. Heizzone zu variieren. So kann beispielsweise die Heizeinrichtung 3 nur mit 30% betrieben werden und die Heizeinrichtung 4, bevorzugt in derselben Höhe, dagegen mit 81%. Um etwas mehr Variation zu ermöglichen, kann man versuchen bei der Einstellung des Grundrezepts auf extreme Werte wie z.B. über 95% zu verzichten, oder auf Randheizkästen zu verzichten.

Durch die Regelung der Erwärmungseinrichtung wird bevorzugt zudem eine variable Blasformmaschine ermöglicht. Bevorzugt kann demnach die Transportgeschwindigkeit in der Erwärmungseinrichtung erhöht werden, wenn die Ausbringrate der Blasformmaschine erhöht werden soll. Entsprechend kann dabei auch die Geschwindigkeit der Blasformmaschine an die Geschwindigkeit der Erwärmungseinrichtung angepasst werden oder der Blasprozess in der Blasformmaschine entsprechend verändert werden.

Bei einem bevorzugten Verfahren wird demnach die Heizleistung jeder Heizeinrichtung und/oder insbesondere auch benachbarter Heizeinrichtungen individuell und/oder unabhängig voneinander geregelt und/oder verändert. Bevorzugt kann demnach die Heizleistung jeder Heizeinrichtung unabhängig von der Heizleistung der anderen Heizeinrichtungen individual geregelt werden, so dass die Heizleistung derart auf die jeweilige Transportgeschwindigkeit angepasst werden kann, so dass das auf die Kunststoffvorformlinge aufzubringende Temperaturprofil unabhängig von der Transportgeschwindigkeit stets gleich ist. Jede Heizeinrichtung bildet dabei bevorzugt eine eigenständige und unabhängige Heizzone aus.

Bei einem weiteren bevorzugten Verfahren wird die Heizleistung der Heizeinrichtungen und/oder die Transportgeschwindigkeit der Kunststoffvorformlinge stufenlos geregelt. Dies bedeutet, dass beispielsweise die Heizleistung der Heizeinrichtung auf jeden beliebigen Wert zwischen einer Heizleistung von 0% und 100% einstellbar ist. Bevorzugt kann auch ein bestimmter Bereich vorgegeben werden innerhalb dem jeder beliebige Wert einstellbar ist, wie beispielsweise ein Bereich von 10% - 85%. Durch diese stufenlose Regelung wird vorteilhaft eine sehr genaue und feine Einstellung der Heizleistung ermöglicht.

In einem weiteren bevorzugten Verfahren ist wenigstens eine Heizeinrichtung und sind bevorzugt mehrere Heizeinrichtungen entlang des Transportpfads der Erwärmungseinrichtung verschiebbar angeordnet. Bevorzugt wird die wenigstens eine Heizeinrichtung entlang des linearen Transportabschnitts verschoben bzw. ist entlang des linearen Transportabschnitts verschiebbar angeordnet. Besonders bevorzugt ist wenigstens die Heizeinrichtung verschiebbar, welche die Kunststoffvorformlinge als letztes erwärmt bzw. welche direkt vor der Ausgleichszone des Transportsterns oder in Transportrichtung der Kunststoffvorformlinge gesehen, am Ende der Transporteinrichtung angeordnet ist.

Denkbar wäre auch, dass eine oder mehrere an anderen Stellen der Transporteinrichtung angeordneten Heizeinrichtungen verschiebbar angeordnet sind, wie beispielsweise die erste Heizeinrichtung und/oder die vor und/oder nach der Ausgleichszone des gekrümmten Transportabschnitts angeordneten Heizeinrichtungen. Durch verschiebbare Heizeinrichtungen kann insbesondere der Abstand zu benachbarten Heizeinrichtungen eingestellt werden und auch der Abschnitt auf der Transporteinrichtung wann ein bestimmtes und/oder endgültiges Temperaturprofil auf den Kunststoffvorformling aufgebracht wird individuell bestimmt werden.

Bei einem bevorzugten Verfahren wird innerhalb der Erwärmungseinrichtung eine Innen- und/oder Außentemperatur der Kunststoffvorformlinge erfasst und diese Temperatur zur Regelung der Heizleistung der Heizeinrichtungen herangezogen. Bevorzugt ist hierzu wenigstens ein Temperatursensor und besonders bevorzugt mehrere Temperatursensoren innerhalb der Erwärmungseinrichtung angeordnet.

Bevorzugt ermitteln die Temperatursensoren dabei die Außen- und/oder Innentemperatur der Vorformlinge an einem oder mehreren Orten, um Rückschlüsse auf die Heizhistorie zu erhalten. Bevorzugt kann auch basierend auf diesen Daten eine überlagerte Regelung/Steuerung die Heizparameter anpassen. Bei den Temperatursensoren kann es sich bevorzugt, allerdings nicht ausschließlich, um Pyrometer oder IR-Kameras handeln. Diese können zur Variation des Messpunkts vorteilhaft geschwenkt werden. Alternativ kann der Messpunkt auch über Spiegel variiert werden.

Auch wäre es denkbar, dass die Anpassung der Heizleistung basierend auf einem anderen Regelkonzept vorgenommen wird, welches auf einer Temperatur der Vorformlinge und/oder einer Wandstärkeinformationen der Behälter (oder auch anderen Behälterkennwerte wie Topload ect...) auf einem Neuronalen Netz oder Maschine Learning Modell basiert.

Bei einem bevorzugten Verfahren wird die Heizleistung über wenigstens ein erstes Eckrezept und ein zweites Eckrezept geregelt und bevorzugt linear interpoliert, wobei das erste Eckrezept eine erste Heizleistung enthält und das zweite Eckrezept eine zweite Heizleistung. Demnach ist auch eine Anpassung der Leistung über zwei Eckpunkte denkbar und beispielsweise über eine Verbindung mehrerer Regelungs/Steuerungs-Algorithmen. So ist es beispielsweise denkbar, dass ein Rezept bei 95% Nenngeschwindigkeit eingestellt wird, dieses dann nach der Logik der Heizhistorie auf z.B. 75% gerechnet wird, dann das 75% Rezept nochmal manuell leicht angepasst wird und dann beide Modelle vereint werden um Rezepte von 100% -70% einzustellen.

Darüber hinaus können bevorzugt noch weitere Werte angepasst werden. Beispielsweise wäre es denkbar, neben der Heizleistung auch die Ventilation anzupassen. Weiterhin könnte, um die fehlende Heizleistung in der Umlenkung bzw. dem gekrümmten Abschnitt zu kompensieren, auch ein zusätzlicher Heizkasten in dem gekrümmten Abschnitt angeordnet sein.

Bevorzugt wäre auch eine Vortemperierung der Vorformlinge denkbar, welche die unterschiedlichen Heizhistorien etwas angleicht. Die Logik der angepassten Heizhistorie kann sich auf jede horizontale Heizzone bzw. Heizeinrichtung einzeln beziehen, wobei vorteilhaft auch rechnerisch Heizzonen unterschiedlicher Höhen, z.B. Nachbarheizzonen miteinander kombiniert werden können.

Da die Temperatur in den Ausgleichzonen nicht so einfach ausgeglichen werden kann wie in den Heizeinrichtungen wäre es denkbar, dass die Vorformlinge hier nicht mit einer Kette mit festen Teilungen transportiert werden, sondern bevorzugt mit einzelnen variablen Werkstückträgern (LLM), um so die Durchfahrtgeschwindigkeit durch bestimmte Zonen bzw. Abschnitte variieren zu können und demnach die Heizhistorie besser anpassen zu können.

Die vorliegende Erfindung ist weiterhin auch auf eine Vorrichtung zum Erwärmen von Kunststoffvorformlingen gerichtet, mit einer Erwärmungseinrichtung innerhalb derer die Kunststoffvorformlinge mittels einer Transporteinrichtung entlang eines vorgegebenen Transportpfads transportiert werden, wobei die Kunststoffvorformlinge während des Transports mittels einer Vielzahl von entlang des Transportpfads angeordneten Heizeinrichtungen auf eine vorgegebene Temperatur erwärmbar sind, wobei eine auf die Kunststoffvorformlinge auftreffende Heizleistung der Heizeinrichtungen veränderbar ist.

Erfindungsgemäß weist die Vorrichtung eine Steuerungs- und/oder Regelungseinrichtung auf, welche die auf die Kunststoffvorformlinge auftreffende Heizleistung der Heizeinrichtungen in Abhängigkeit einer Transportgeschwindigkeit der Kunststoffvorformlinge regelt.

Es wird demnach auch vorrichtungsseitig vorgeschlagen die Heizleistung jeder Heizeinrichtung bevorzugt individuell auf die Transportgeschwindigkeit der Kunststoffvorformlinge anzupassen und insbesondere bei langsamerer Transportgeschwindigkeit die Heizleistung der Heizeinrichtungen zu verringern und bei höherer Transportgeschwindigkeit die Heizleistung der Heizeinrichtungen zu erhöhen.

Bei einer bevorzugten Ausführungsform weist die Erwärmungseinrichtung wenigstens einen und bevorzugt eine Vielzahl von Temperatursensoren auf, welche eine Innen- und/oder eine Außentemperatur der Kunststoffvorformlinge erfassen. Wie oben bereits erwähnt, ermitteln die Temperatursensoren dabei bevorzugt die Außen- und/oder Innentemperatur der Vorformlinge an einem oder mehreren Orten, um hieraus Rückschlüsse auf die Heizhistorie zu erhalten.

Bei einer weiteren bevorzugten Ausführungsform ist daher die Heizleistung der Heizeinrichtungen in Abhängigkeit der von den Temperatursensoren erfassten Temperatur regelbar. Weisen die Vorformlinge demnach beispielswiese an einem bestimmten Abschnitt des Transportpfades eine zu geringe Temperatur auf, wird die Heizleistung einer oder mehrerer Heizeinrichtungen entsprechend erhöht.

In einer weiteren bevorzugten Ausführungsform sind an wenigstens einem Abschnitt des Transportpfads der Erwärmungseinrichtung keine Heizeinrichtungen angeordnet. Bevorzugt handelt es sich dabei um die gekrümmten Abschnitte des Transportpfads.

Bei einer bevorzugten Ausführungsform sind die Heizeinrichtungen aus einer Gruppe von Heizeinrichtungen ausgewählt, welche IR-Lampen, Mikrowellenerwärmungseinrichtungen, Laserarrays und dergleichen enthält.

Die Vorrichtung umfasst bevorzugt auch eine oder mehrere weitere Einrichtungen, wie beispielsweise eine Fülleinrichtung zum Befüllen von Behältnissen, eine Verschließeinrichtung zum Verschließen der Behältnisse, eine Sterilisationseinrichtung zum Sterilisieren von Vorformlingen und/oder Behältnissen, oder dergleichen. Bevorzugt sind dabei aller Einrichtungen miteinander geblockt bzw. aufeinander synchronisiert, so dass bevorzugt auch eine blockübergreifende Regelung denkbar ist, die beispielsweise abhängig von der maximal möglichen Füllgeschwindigkeit die Leitgeschwindigkeit ist.

Weiterhin ist die vorliegende Erfindung auch auf eine Anlage zum Erwärmen von Kunststoffvorformlingen gerichtet, mit einer Transporteinrichtung, welche die Kunststoffvorformlinge entlang eines vorgegebenen Transportpfades transportiert, wobei die Kunststoffvorformlinge während des Transports mittels einer Vielzahl von entlang des Transportpfads angeordneten Heizeinrichtungen auf eine vorgegebene Temperatur erwärmbar sind, und wobei stromabwärts der Anlage zum Erwärmen eine Umformungseinrichtung zum Umformen von Kunststoffvorformlingen zu Kunststoffbehältnissen angeordnet ist.

Erfindungsgemäß weist die Anlage eine Steuerungs- und/oder Regelungseinrichtung auf, welche die auf die Kunststoffvorformlinge auftreffende Heizleistung der Heizeinrichtungen in Abhängigkeit einer Transportgeschwindigkeit der Kunststoffvorformlinge regelt und/oder in Abhängigkeit von dieser Transportgeschwindigkeit die Umformungseinrichtung steuerbar und/oder regelbar ist.

Auch diese Anlage umfasst dabei bevorzugt eine oder mehrere weitere Einrichtungen, wie beispielsweise eine Fülleinrichtung zum Befüllen von Behältnissen, eine Verschließeinrichtung zum Verschließen der Behältnisse, eine Sterilisationseinrichtung zum Sterilisieren von Vorformlingen und/oder Behältnissen, oder dergleichen, welche miteinander verblockt und/oder aufeinander synchronisiert sind, so dass eine blockübergreifende Regelung möglich ist.

Weitere Vorteile und Ausführungsformen ergeben sich aus den beigefügten Zeichnungen.

Darin zeigt:
- Fig. 1: eine erste schematische Ausführungsform einer erfindungsgemäßen Vorrichtung zum Erwärmen von Kunststoffvorformlingen;
- Fig. 2: ein schematisches Diagramm für ein Heizprofil eines Kunststoffvorformlings in Abgängigkeit von Zeit und Energie;
- Fig. 3: ein weiteres schematisches Diagramm für ein Heizprofil eines Kunststoffvorformlings in Abgängigkeit von Zeit und Energie;
- Fig. 4: ein weiteres schematisches Diagramm für ein Heizprofil eines Kunststoffvorformlings in Abgängigkeit von Zeit und Energie; und
- Fig. 5: eine zweite schematische Ausführungsform einer erfindungsgemäßen Vorrichtung zum Erwärmen von Kunststoffvorformlingen.

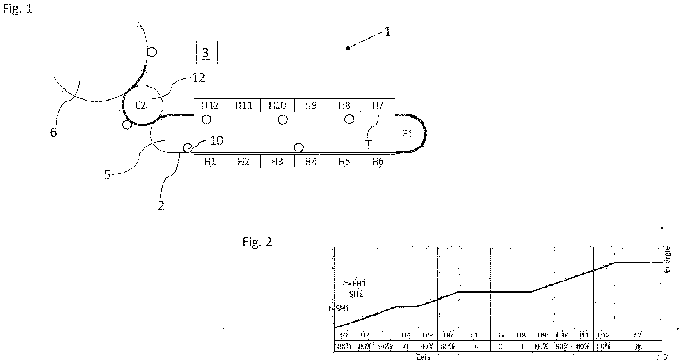

Figur 1 zeigt eine erste schematische Ausführungsform einer erfindungsgemäßen Vorrichtung 1 zum Erwärmen von Kunststoffvorformlingen 10. Die Vorrichtung 1 weist in diesem Ausführungsbeispiel eine Erwärmungseinrichtung 5 und eine Umformungseinrichtung 6 auf. Die innerhalb der Erwärmungseinrichtung 5 erwärmten Kunststoffvorformlinge 10 werden dabei mittels eines Transportsterns 12 an die Umformungseinrichtung 6 übergeben.

Die Kunststoffvorformlinge 10 werden dabei mit einer Transporteinrichtung 2 entlang eines vorgegebenen Transportpfades T durch die Erwärmungseinrichtung 5 transportiert und während des Transports mit einer Vielzahl von entlang des Transportpfades T angeordneten Heizeinrichtungen H1 ... H12 auf eine vorgegebene Temperatur erwärmt. Die Transporteinrichtung 2 weist hierzu eine Vielzahl von (nicht gezeigten) Halteeinrichtungen zum Halten der Kunststoffvorformlinge auf.

Das Bezugszeichen 3 kennzeichnet eine Steuerungs- und/oder Regelungseinrichtung, zum Regeln bzw. Verändern einer Heizleistung der Heizeinrichtungen H1... H12. Weiterhin ist erkennbar, dass innerhalb eines gekrümmten Abschnitts der Transporteinrichtung 2, bei welchem es sich bevorzugt um eine Ausgleichszone E1 handelt keine Heizeinrichtungen angeordnet sind. Weiterhin bildet der Transportstern 12 eine zweite derartige Ausgleichszone E2 aus. Die Temperatur der Kunststoffvorformlinge 10 bleibt in den Ausgleichszonen E1, E2 bevorzugt konstant bzw. ändert sich zumindest nicht wesentlich.

Figur 2 zeigt ein schematisches Diagramm für ein Heizprofil eines Kunststoffvorformlings in Abgängigkeit von Zeit und Energie. Dargestellt ist dabei der Temperaturverlauf in Abhängigkeit von der Zeit bzw. den einzelnen Heizeinrichtungen H1... H12. Die Heizeinrichtungen H1... H3, H5, H6 und H9... H12 sind dabei in diesem Beispiel auf eine Heizleistung von 80% eingestellt, während die Heizeinrichtungen H4, H7 und H8 komplett ausgeschalten sind. Erkennbar ist dabei auch, dass die Energie bzw. Temperatur der Vorformlinge bei den ausgeschalteten Heizeinrichtungen sowie den Ausgleichszonen E1 und E2 konstant bleibt, während die Temperatur bei den Heizeinrichtungen H1... H3, H5, H6 und H9... H12 zunimmt und insbesondere linear ansteigt.

Der Zeitpunkt t=0 kennzeichnet dabei den Zeitpunkt, zu dem der erwärmte Kunststoffvorformling an die Blasformmaschine übergeben wird und der Zeitpunkt t=SH1 den Zeitpunkt, an dem sich der Vorformling an der ersten Heizeinrichtung H1 befindet. Entsprechend kennzeichnet der Zeitpunkt t=SH2 den Zeitpunkt, an dem sich der Vorformling an der zweiten Heizeinrichtung H2 befindet.

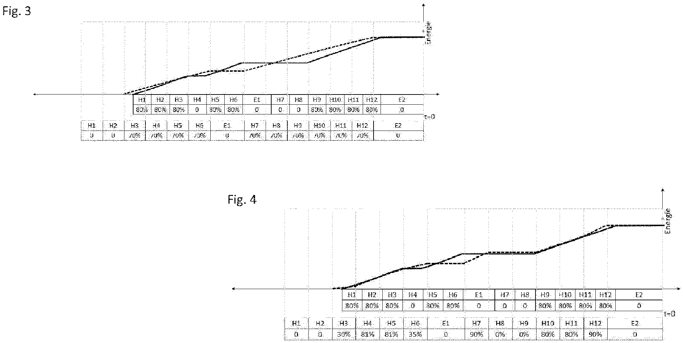

Figur 3 zeigt ein weiteres schematisches Diagramm für ein Heizprofil eines Kunststoffvorformlings in Abgängigkeit von Zeit und Energie. Der Verlauf der durchgezogenen Linie entspricht dabei dem in Figur 2 gezeigten Verlauf.

Bei der gestrichelten Linie handelt es sich um das Temperaturprofil des Vorformlings mit veränderten Heizleistungen der Heizeinrichtungen H1...H12. Aus der unteren, ebenfalls gestrichelten Tabelle geht dabei hervor, dass die Heizeinrichtungen H1 und H2 ausgeschalten sind und die Leistungen der Heizeinrichtungen H3... H 12 auf 70% verändert wurde.

Die Heizleistung wurde demnach im Vergleich zu der durchgezogenen Linie/Tabelle verringert, da die Kunststoffvorformlinge mit einer geringeren Transportgeschwindigkeit durch die Erwärmungseinrichtung transportiert wurden und demnach länger vor den einzelnen Heizeinrichtungen verweilen.

Das Diagramm veranschaulicht dabei, dass trotz der veränderten Geschwindigkeit ein annähernd gleiches Heizprofil über die Zeit ermöglicht wird sowie insbesondere eine identische Temperatur am Ende.

Figur 4 zeigt ein weiteres schematisches Diagramm für ein Heizprofil eines Kunststoffvorformlings in Abgängigkeit von Zeit und Energie. Auch hier entspricht die durchgezogene Line wieder dem in Figur 2 gezeigten Verlauf.

Die Figur 4 zeigt dabei insbesondere eine weitere Möglichkeit der Anpassung der Heizleistungen der Heizeinrichtungen H1... H12, bei welcher jedoch wieder ein annähernd gleiches Heizprofil entsteht, wie durch die gestrichelte Linie verdeutlicht wird. Aus der zugehörigen (gestrichelten) Tabelle geht dabei hervor, dass in diesem Beispiel die Heizeinrichtungen H1, H2, H8 und H9 komplett ausgeschalten sind und die restlichen Heizeinrichtungen, anders als in dem in Figur 3 gezeigten Beispiel, unterschiedliche Heizleistungen aufweisen. Die Heizeinrichtung H3 wird hier mit 30% betrieben, die Heizeinrichtungen H4 und H5 mit 81%, die Heizeinrichtung H6 mit 35%, die Heizeinrichtungen H7 und H12 mit 90% und die Heizeinrichtungen H10 und H11 mit 80%.

Die Figuren 3 und 4 veranschaulichen dabei insbesondere, dass bei einer Änderung der Transportgeschwindigkeit durch die Erwärmungseinrichtung durch unterschiedliche Einstellungen der Heizleistungen der Heizeinrichtungen trotzdem nahezu ähnliche Temperaturprofile, mit identischer End-Temperatur auf den Kunststoffvorformlingen erzeugt werden können.

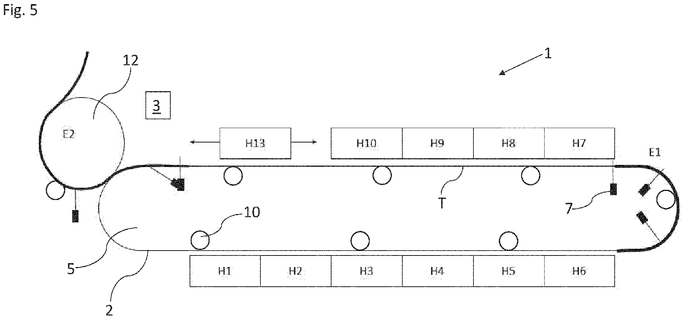

Figur 5 zeigt eine zweite schematische Ausführungsform einer erfindungsgemäßen Vorrichtung 1 zum Erwärmen von Kunststoffvorformlingen 10. Die hier gezeigte Vorrichtung 1 entspricht dabei im Wesentlichen der in Figur 1 gezeigten Vorrichtung, so dass hier nicht mehr auf die bereits im Rahmen der Beschreibung der Figur 1 eingegangenen Bezugszeichen verwiesen wird.

Anders als in der in Figur 1 gezeigten Ausführungsform weist die Vorrichtung hier jedoch zudem mehrere Temperatursensoren 7 auf, welche eine Innen- und/oder Außentemperatur der Kunststoffvorformlinge 10 erfassen können. Ein derartiger Temperatursensor 7 könnte dabei, wie in der Figur 5 erkennbar ist, beispielsweise auch an dem Transportstern 2 angeordnet sein. Die Anordnung der Temperatursensoren in der Vorrichtung ist dabei beispielhaft und nicht auf diese Anordnung begrenzt. Vielmehr können diese an jeder beliebigen Stelle der Vorrichtung angeordnet sein.

Weiterhin ist in der Figur 5 die Heizeinrichtung H13 verschiebbar angeordnet, wie durch die Pfeile verdeutlicht wird. Auch die Anordnung dieser verschiebbaren Heizeinrichtung ist dabei nicht auf diese gezeigte Anordnung beschränkt. Vielmehr kann jede andere Heizeinrichtung verschiebbar angeordnet werden oder die Erwärmungseinrichtung kann auch mehrere verschiebbare Heizeinrichtungen aufweisen.

### Bezugszeichenliste

- 1: Vorrichtung
- 2: Transporteinrichtung
- 3: Steuerungs- und/oder Regelungseinrichtung
- 5: Erwärmungseinrichtung
- 6: Umformungseinrichtung
- 7: Temperatursensor
- 10: Kunststoffvorformlinge
- 12: Transportrad

- E1, E2: Ausgleichszone
- H1... H13: Heizeinrichtungen
- T: Transportpfad

## Patentansprüche

1. Verfahren zum Erwärmen von Kunststoffvorformlingen (10), wobei die Kunststoffvorformlinge innerhalb einer Erwärmungseinrichtung (5) entlang eines vorgegebenen Transportpfads (T) transportiert werden und während dieses Transports mittels einer Vielzahl von entlang des Transportpfads (T) angeordneten Heizeinrichtungen (H1... H12) auf eine vorgegebene Temperatur erwärmt werden, und wobei eine auf die Kunststoffvorformlinge (10) auftreffende Heizleistung der Heizeinrichtungen (H1 ... H12) veränderbar ist,
**dadurch gekennzeichnet, dass**
die auf die Kunststoffvorformlinge (10) auftreffende Heizleistung der Heizeinrichtungen (H1 ... H12) in Abhängigkeit einer Transportgeschwindigkeit der Kunststoffvorformlinge (10) geregelt wird,
wobei die Heizleistung jeder Heizeinrichtung (H1 ... H12) und/oder insbesondere auch benachbarter Heizeinrichtungen (H1... H12) individuell und/oder unabhängig voneinander geregelt und/oder verändert wird.

2. Verfahren nach Anspruch 1,
**dadurch gekennzeichnet, dass**
die Heizleistung der Heizeinrichtungen (H1 ... H12) und/oder die Transportgeschwindigkeit der Kunststoffvorformlinge (10) stufenlos geregelt wird.

3. Verfahren nach Anspruch 1,
**dadurch gekennzeichnet, dass**
wenigstens eine Heizeinrichtung (H1... H12) und bevorzugt mehrere Heizeinrichtungen (H1... H12) entlang des Transportpfads (T) der Erwärmungseinrichtung (5) verschiebbar angeordnet sind.

4. Verfahren nach Anspruch 1,
**dadurch gekennzeichnet, dass**
innerhalb der Erwärmungseinrichtung (5) eine Innen- und/oder Außentemperatur der Kunststoffvorformlinge (10) erfasst wird und diese Temperatur zur Regelung der Heizleistung der Heizeinrichtungen (H1... H12) herangezogen wird.

5. Verfahren nach Anspruch 1,
**dadurch gekennzeichnet, dass**
die Heizleistung über wenigstens ein erstes und ein zweites Eckrezept geregelt und bevorzugt linear interpoliert wird, wobei das erste Eckrezept eine erste Heizleistung enthält und das zweite Eckrezept eine zweite Heizleistung.

6. Vorrichtung (1) zum Erwärmen von Kunststoffvorformlingen (10), mit einer Erwärmungseinrichtung (5), innerhalb derer die Kunststoffvorformlinge (10) mittels einer Transporteinrichtung (2) entlang eines vorgegebenen Transportpfads (T) transportiert werden, wobei die Kunststoffvorformlinge (10) während des Transports mittels einer Vielzahl von entlang des Transportpfads (T) angeordneten Heizeinrichtungen (H1... H12) auf eine vorgegebene Temperatur erwärmbar sind, wobei eine auf die Kunststoffvorformlinge (10) auftreffende Heizleistung der Heizeinrichtungen (H1 ... H12) veränderbar ist,
**dadurch gekennzeichnet, dass**
die Vorrichtung (1) eine Steuerungs- und/oder Regelungseinrichtung (3) aufweist, welche die auf die Kunststoffvorformlinge (10) auftreffende Heizleistung der Heizeinrichtungen (H1... H12) in Abhängigkeit einer Transportgeschwindigkeit der Kunststoffvorformlinge (10) regelt, wobei die Heizleistung jeder Heizeinrichtung (H1...H12) und/oder insbesondere auch benachbarter Heizeinrichtungen (H1... H12) individuell und/oder unabhängig voneinander regelbar und/oder veränderbar ist.

7. Vorrichtung (1) nach Anspruch 6,
**dadurch gekennzeichnet, dass**
die Erwärmungseinrichtung (5) wenigstens einen und bevorzugt eine Vielzahl von Temperatursensoren (7) aufweist, welche eine Innen- und/oder eine Außentemperatur der Kunststoffvorformlinge (10) erfasst.

8. Vorrichtung (1) nach Anspruch 7,
**dadurch gekennzeichnet, dass**
die Heizleistung der Heizeinrichtungen (H1... H12) in Abhängigkeit der von den Temperatursensoren (7) erfassten Temperatur regelbar ist.

9. Vorrichtung (1) nach Anspruch 6,
**dadurch gekennzeichnet, dass**
an wenigstens einem Abschnitt des Transportpfads (T) der Erwärmungseinrichtung (5) keine Heizeinrichtungen (H1... H12) angeordnet sind.

10. Vorrichtung (1) nach Anspruch 6,
**dadurch gekennzeichnet, dass**
die Heizeinrichtungen (H1... H12) aus einer Gruppe von Heizeinrichtungen ausgewählt sind, welche IR-Lampen, Mikrowellenerwärmungseinrichtungen, Laserarrays und dergleichen enthält.

11. Anlage zum Erwärmen von Kunststoffvorformlingen (10), mit einer Transporteinrichtung (2), welche die Kunststoffvorformlinge (10) entlang eines vorgegebenen Transportpfades (T) transportiert, wobei die Kunststoffvorformlinge (10) während des Transports mittels einer Vielzahl von entlang des Transportpfads (T) angeordneten Heizeinrichtungen (H1... H12) auf eine vorgegebene Temperatur erwärmbar sind, und wobei stromabwärts der Anlage zum Erwärmen eine Umformungseinrichtung (6) zum Umformen von Kunststoffvorformlingen (10) zu Kunststoffbehältnissen angeordnet ist,
**dadurch gekennzeichnet, dass**
die Anlage eine Steuerungs- und/oder Regelungseinrichtung (3) aufweist, welche die auf die Kunststoffvorformlinge (10) auftreffende Heizleistung der Heizeinrichtungen (H1... H12) in Abhängigkeit einer Transportgeschwindigkeit der Kunststoffvorformlinge (10) regelt und/oder in Abhängigkeit von dieser Transportgeschwindigkeit die Umformungseinrichtung (6) steuerbar und/oder regelbar ist,
wobei die Heizleistung jeder Heizeinrichtung (H1... H12) und/oder insbesondere auch benachbarter Heizeinrichtungen (H1... H12) individuell und/oder unabhängig voneinander regelbar und/oder veränderbar ist.

## Claims

1. A method for heating plastic preforms (10), wherein the plastic preforms are transported along a predetermined transport path (T) within a heating device (5) and are heated to a predetermined temperature during this transport by a plurality of heating devices (H1... H12) arranged along the transport path (T), and wherein a heating power of the heating devices (H1... H12) impinging on the plastic preforms (10) can be varied, **characterised in that**
the heating power of the heating devices (H1... H12) impinging on the plastic preforms (10) is controlled depending on a transport speed of the plastic preforms (10),
wherein the heating power of each heating device (H1 ... H12) and/or in particular also of adjacent heating devices (H1 ... H12) are controlled and/or changed individually and/or independently from each other.

2. The method according to claim 1,
**characterised in that**
the heating power of the heating devices (H1... H12) and/or the transport speed of the plastic preforms (10) is continuously controlled.

3. The method according to claim 1,
**characterised in that**
at least one heating device (H1... H12) and preferably several heating devise (H1 ... H12) are displaceably arranged along the transport path (T) of the heating device (5).

4. The method according to claim 1,
**characterised in that**
an internal and/or external temperature of the plastic preforms (10) is detected within the heating device (5) and this temperature is used to control the heating power of the heating devices (H1... H12).

5. The method according to claim 1,
**characterised in that**
the heating power is controlled via at least a first and a second corner recipe and is linearly interpolated, wherein the first corner recipe containing a first heating power and the second corner recipe containing a second heating power.

6. An apparatus (1) for heating plastic preforms (10), having a heating device (5) within which the plastic preforms (10) are transported along a predetermined transport path (T) by a transport device (2), wherein the plastic preforms (10) are heated to a predetermined temperature during transport by a plurality of heating devices (H1...H12) arranged along the transport path (T), wherein a heating power of the heating devices (H1... H12) which impinges on the plastic preforms (10) is changeable, **characterised in that**
the apparatus (1) has a control and/or regulating device (3) which regulates the heating power of the heating devices (H1... H12) impinging on the plastic preforms (10) depending on a transport speed of the plastic preforms (10), wherein the heating power of each heating device (H1...H12) and/or in particular also of adjacent heating devices (H1...H12) are controlled and/or changed individually and/or independently from each other.

7. The apparatus according to claim 6,
**characterised in that**
the heating device (5) has at least one and preferably a plurality of temperature sensors (7) which detects an internal and/or an external temperature of the plastic preforms (10).

8. The apparatus according to claim 7,
**characterised in that**
the heating power of the heating devices (H1... H12) can be controlled depending on the temperature detected by the temperature sensors (7).

9. The apparatus according to claim 6,
**characterised in that**
no heating devices (H1 ... H12) are arranged on at least one section of the transport path (T) of the heating device (5).

10. The apparatus according to claim 6,
**characterised in that**
the heating devices (H1 ... H12) are selected from a group of heating devices including IR lamps, microwave heating devices, laser arrays and the like.

11. Installation for heating plastic preforms (10), having a transport device (2) which transports the plastic preforms (10) along a predefined transport path (T), wherein the plastic preforms (10) are heated to a predefined temperature during transport by a plurality of heating devices (H1 ... H12) arranged along the transport path (T), and wherein a forming device (6) for forming plastic preforms (10) into plastic containers is arranged downstream of the installation for heating,
**characterised in that**
the installation has a control and/or regulating device (3) which regulates and/or controls the heating power of the heating devices (H1... H12) impinging on the plastic preforms (10) depending on a transport speed of the plastic preforms (10) and/or the forming device (6) can be controlled and/or regulated depending on this transport speed,
wherein the heating power of each heating device (H1 ... H12) and/or in particular also of adjacent heating devices (H1 ... H12) are controlled and/or changed individually and/or independently from each other.

## Revendications

1. Dispositif de chauffage de préformes en matière plastique (10), dans lequel les préformes en matière plastique sont transportées le long d'un trajet de transport (T) prédéfini à l'intérieur d'un système de chauffage (5) et sont chauffées à une température prédéfinie au moyen d'une pluralité de systèmes de chauffage (H1... H12) disposés le long du trajet de transport (T) pendant ledit transport, et dans lequel une puissance de chauffage, se formant sur les préformes en matière plastique (10), des systèmes de chauffage (H1... H12) peut être modifiée,
**caractérisé en ce que**
la puissance de chauffage, se formant sur les préformes en matière plastique (10), des systèmes de chauffage (H1 ... H12) est régulée en fonction d'une vitesse de transport des préformes en matière plastique (10),
dans lequel la puissance de chauffage de chaque système de chauffage (H1...H12) et/ou en particulier également de systèmes de chauffage (H1...H12) adjacents est régulée et/ou modifiée individuellement et/ou indépendamment les unes des autres.

2. Procédé selon la revendication 1,
**caractérisé en ce que**
la puissance de chauffage des systèmes de chauffage (H1... H12) et/ou la vitesse de transport des préformes en matière plastique (10) sont régulées en continu.

3. Procédé selon la revendication 1,
**caractérisé en ce que**
au moins un système de chauffage (H1... H12) et de manière préférée plusieurs systèmes de chauffage (H1 ... H12) sont disposés de manière à pouvoir être coulissés le long du trajet de transport (T) du système de chauffage (5).

4. Procédé selon la revendication 1,
**caractérisé en ce que**
une température intérieure et/ou extérieure des préformes en matière plastique (10) sont détectées à l'intérieur du système de chauffage (5) et cette température est prise en compte pour réguler la puissance de chauffage des systèmes de chauffage (H1 ... H12).

5. Procédé selon la revendication 1,
**caractérisé en ce que**
la puissance de chauffage est régulée par l'intermédiaire d'au moins une première et une deuxième prescription de référence et est interpolée de manière préférée linéairement, dans lequel la première prescription de référence contient une première puissance de chauffage et la deuxième prescription de référence une deuxième puissance de chauffage.

6. Dispositif (1) de chauffage de préformes en matière plastique (10), avec un système de chauffage (5), à l'intérieur duquel les préformes en matière plastique (10) sont transportées le long d'un trajet de transport (T) prédéfini au moyen d'un système de transport (2), dans lequel les préformes en matière plastique (10) peuvent être chauffées à une température prédéfinie au moyen d'une pluralité de systèmes de chauffage (H1 ... H12) disposés le long du trajet de transport (T) pendant le transport, dans lequel une puissance de chauffage, se formant sur les préformes en matière plastique (10), des systèmes de chauffage (H1... H12) peut être modifiée,
**caractérisé en ce que**
le dispositif (1) présente un système de commande et/ou de régulation (3), lequel régule la puissance de chauffage, se formant sur les préformes en matière plastique (10), des systèmes de chauffage (H1... H12) en fonction d'une vitesse de transport des préformes en matière plastique (10), dans lequel la puissance de chauffage de chaque système de chauffage (H1... H12) et/ou en particulier également de systèmes de chauffage (H1... H12) adjacents peut être régulée et/ou modifiée individuellement et/ou indépendamment les unes des autres.

7. Dispositif (1) selon la revendication 6,
**caractérisé en ce que**
le système de chauffage (5) présente au moins un et de manière préférée une pluralité de capteurs de température (7), laquelle détecte une température intérieure et/ou une température extérieure des préformes en matière plastique (10).

8. Dispositif (1) selon la revendication 7,
**caractérisé en ce que**
la puissance de chauffage des systèmes de chauffage (H1 ... H12) peut être régulée en fonction de la température détectée par les capteurs de température (7).

9. Dispositif (1) selon la revendication 6,
**caractérisé en ce que**
aucun système de chauffage (H1... H12) n'est disposé sur au moins une section du trajet de transport (T) du système de chauffage (5).

10. Dispositif (1) selon la revendication 6,
**caractérisé en ce que**
les systèmes de chauffage (H1... H12) sont choisis parmi un groupe de systèmes de chauffage, lequel contient des lampes IR, des systèmes de chauffage à micro-ondes, des réseaux laser et similaires.

11. Installation de chauffage de préformes en matière plastique (10), avec un système de transport (2), lequel transporte les préformes en matière plastique (10) le long d'un trajet de transport (T) prédéfini, dans laquelle les préformes en matière plastique (10) peuvent être chauffées à une température prédéfinie au moyen d'une pluralité de systèmes de chauffage (H1 ... H12) disposés le long du trajet de transport (T) pendant le transport, et dans lequel un système de façonnage (6) destiné à façonner des préformes en matière plastique (10) en récipients en matière plastique est disposé en aval de l'installation de chauffage, **caractérisée en ce que**
l'installation présente un système de commande et/ou de régulation (3), lequel régule la puissance de chauffage, se formant sur les préformes en matière plastique (10), des systèmes de chauffage (H1... H12) en fonction d'une vitesse de transport des préformes en matière plastique (10) et/ou le système de façonnage (6) peut être commandé et/ou régulé en fonction de ladite vitesse de transport,
dans lequel la puissance de chauffage de chaque système de chauffage (H1...H12) et/ou en particulier également de systèmes de chauffage (H1...H12) adjacents peut être régulée et/ou modifiée individuellement et/ou indépendamment les unes des autres.
